# EUROPEAN PATENT APPLICATION

(11) **EP 4 328 998 A1**
(43) Date of publication of application: **28.02.2024**
(21) Application number: 23177187.4
(22) Date of filing: 05.06.2023
(51) Int. Cl.: H01M 4/131, H01M 4/36, H01M 4/525, H01M 10/0525

(54) **POSITIVE ACTIVE MATERIAL FOR RECHARGEABLE LITHIUM BATTERY AND RECHARGEABLE LITHIUM BATTERY INCLUDING THE SAME**

(30) Priority: 26.08.2022 KR 20220107852
(71) Applicant: Samsung SDI Co., Ltd., Yongin-si, Gyeonggi-do 17084 (KR)
(72) Inventor: CHAE, Youngjoo, 17084 Yongin-si (KR)
(74) Representative: Marks & Clerk LLP

(57) **Abstract**

Provided are a positive active material for a rechargeable lithium battery, and rechargeable lithium battery including the same, the positive active material including a first positive active material in a form of secondary particles in which a plurality of primary particles are aggregated, including a lithium nickel-based composite oxide having a nickel content of greater than or equal to about 80 mol% based on the total amount of elements excluding lithium and oxygen, and a second positive active material in a form of single particles, including a lithium nickel-based composite oxide having a nickel content of greater than or equal to about 80 mol% based on the total amount of elements excluding lithium and oxygen wherein the lithium nickel-based composite oxide of the second positive active material includes Ni, Co, Mn, Al, Zr, and Mg.

## Description

### BACKGROUND OF THE INVENTION

### (a) Field of the Invention

A positive active material for a rechargeable lithium battery and a rechargeable lithium battery including the same are disclosed.

### (b) Description of the Related Art

A portable information device such as a cell phone, a laptop, a smart phone, and the like or an electric vehicle has used a rechargeable lithium battery having high energy density and easy portability as a driving power source. Recently, research has been actively conducted to use a rechargeable lithium battery with high energy density as a driving power source or power storage power source for hybrid or electric vehicles.

Various positive active materials have been investigated to realize rechargeable lithium batteries for applications to the uses. Among them, lithium nickel-based oxide, lithium nickel manganese cobalt composite oxide, lithium nickel cobalt aluminium composite oxide, lithium cobalt oxide, and the like are mainly used as a positive active material.

Recently, high nickel-based positive active materials have been applied to secure high capacity. In addition, in order to increase energy density, a positive active material in which large and small particles with different particle sizes are mixed in an appropriate ratio has been developed but has a problem of cracks inside the particles during long-term charge and discharge cycles. The cracks cause a side reaction of the positive active material with an electrolyte, which generates gas and thus deteriorates safety and also, depletes the electrolyte and thus deteriorates battery performance. Accordingly, in order to meet a demand on a long cycle-life, a single particle-type nickel-based positive active material having less cracks and a small specific surface area to reduce the side reaction with the electrolyte has been developed. However, the single particles also have internal cracks, when increasing electrode density and running long-term cycles, which lead to deteriorating a cycle-life.

### SUMMARY OF THE INVENTION

An embodiment provides a rechargeable lithium battery realizing high capacity by applying a high nickel-based positive active material, in which a positive active material in a form of secondary particles and a positive active material in a form of single particles are mixed to increase energy density, and strength of the positive active material particles is increased to prevent cracks even during the long-term cycles, improving long cycle-life characteristics.

In an embodiment, a positive active material for a rechargeable lithium battery includes a first positive active material in a form of secondary particles in which a plurality of primary particles are aggregated, including a lithium nickel-based composite oxide having a nickel content of greater than or equal to about 80 mol% based on the total amount of elements excluding lithium and oxygen, and a second positive active material in a form of single particles, including a lithium nickel-based composite oxide having a nickel content of greater than or equal to about 80 mol% based on the total amount of elements excluding lithium and oxygen, wherein the lithium nickel-based composite oxide of the second positive active material includes Ni, Co, Mn, Al, Zr, and Mg.

In another embodiment, a rechargeable lithium battery including a positive electrode including the positive active material, a negative electrode, and an electrolyte is provided.

At least some of the above and other features of the invention are set out in the claims.

The positive active material for a rechargeable lithium battery according to an embodiment and the rechargeable lithium battery including the same may be suppressed from crack generation inside the positive active material during long-term cycles and thus realize long-term cycle-life characteristics as well as realize high capacity and high energy density.

### BRIEF DESCRIPTION OF THE DRAWINGS

FIG. 1 is a schematic view illustrating a rechargeable lithium battery according to an embodiment.
FIG. 2 is a scanning electron microscope (SEM) image of a fracture surface of a positive active material taken after 600 cycles of the battery cell of Comparative Example 1.
FIG. 3 is an SEM image of the fracture surface of the positive active material taken after 600 cycles of the battery cell of Example 1.
FIG. 4 is a graph showing cycle-life characteristics of the battery cells of Example 1, Comparative Examples 1 and 2, and Reference Examples 1 to 5.

### DETAILED DESCRIPTION OF THE EMBODIMENTS

Hereinafter, specific embodiments will be described in detail so that those of ordinary skill in the art can easily implement them. However, this disclosure may be embodied in many different forms and is not construed as limited to the example embodiments set forth herein.

The terminology used herein is used to describe embodiments only, and is not intended to limit the present disclosure. The singular expression includes the plural expression unless the context clearly dictates otherwise.

As used herein, "a combination thereof" refers to a mixture, a laminate, a composite, a copolymer, an alloy, a blend, a reaction product, and the like of constituents.

Herein, it should be understood that terms such as "comprises," "includes," or "have" are intended to designate the presence of an embodied feature, number, step, element, or a combination thereof, but it does not preclude the possibility of the presence or addition of one or more other features, numbers, steps, elements, or a combination thereof.

In the drawings, the thickness of layers, films, panels, regions, etc., are exaggerated for clarity and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

In addition, "layer" herein includes not only a shape formed on the whole surface when viewed from a plan view, but also a shape formed on a partial surface.

In addition, the average particle diameter may be measured by a method well known to those skilled in the art, for example, may be measured by a particle size analyzer, or may be measured by a transmission electron microscope photograph or a scanning electron microscope photograph. Alternatively, it is possible to obtain an average particle diameter value by measuring using a dynamic light scattering method, performing data analysis, counting the number of particles for each particle size range, and calculating from this. Unless otherwise defined, the average particle diameter may mean a diameter (D50) of particles having a cumulative volume of 50 volume% in the particle size distribution.

Herein, "or" is not to be construed as an exclusive meaning, for example, "A or B" is construed to include A, B, A+B, and the like.

### Positive Active Material

In an embodiment, a positive active material for a rechargeable lithium battery includes a first positive active material in a form of secondary particles in which a plurality of primary particles are aggregated, including a lithium nickel-based composite oxide having a nickel content of greater than or equal to about 80 mol% based on the total amount of elements excluding lithium and oxygen, and a second positive active material in a form of single particles, including a lithium nickel-based composite oxide having a nickel content of greater than or equal to about 80 mol% based on the total amount of elements excluding lithium and oxygen. The lithium nickel-based composite oxide of the second positive active material includes Ni, Co, Mn, Al, Zr, and Mg. The first positive active material and the second positive active material have high particle strength, so that generation of internal cracks is suppressed even after a long cycle, and thus, long cycle-life characteristics are improved, and at the same time, high capacity and high energy density may be realized.

### First Positive Active Material

The first positive active material has a polycrystal form, and includes secondary particles formed by aggregation of at least two or more primary particles.

An average particle diameter (D50) of the first positive active material, that is, the average particle diameter of the secondary particles may be about 5 µm to about 25 µm. For example, it may be about 7 µm to about 25 µm, about 9 µm to about 25 µm, about 10 µm to about 25 µm, or about 10 µm to about 20 µm. The average particle diameter of the secondary particles of the first positive active material may be the same as or greater than the average particle diameter of the single-particle second positive active material, which will be described later. The positive active material according to an embodiment may be in the form of a mixture of the first positive active material, which is polycrystalline and large particles, and the second positive active material, which is single particles and small particles, thereby improving a mixture density, and providing high capacity and high energy density. Herein, the average particle diameter of the first positive active material may be obtained by randomly selecting 30 secondary particle-type active materials from the electron microscope photograph of the positive active material to measure a particle diameter, and taking the particle diameter (D50) of the particles having a cumulative volume of 50 volume% in the particle size distribution as the average particle diameter.

The first positive active material includes a lithium nickel-based composite oxide and corresponds to a high nickel-based positive active material. A content of nickel in the lithium nickel-based composite oxide is greater than or equal to about 80 mol%, for example, greater than or equal to about 85 mol%, greater than or equal to about 89 mol%, greater than or equal to about 90 mol%, greater than or equal to about 91 mol%, or greater than or equal to about 94 mol%, and may be less than or equal to about 99.9 mol%, or less than or equal to about 99 mol% based on the total amount of elements excluding lithium and oxygen. When the nickel content satisfies the above range, the positive active material may exhibit excellent battery performance while realizing a high capacity.

The first positive active material may specifically include a lithium nickel-based composite oxide represented by Chemical Formula 1.

[Chemical Formula 1] Liₐ₁Niₓ₁M¹_{y1}M²_{1-x1-y1}O₂

In Chemical Formula 1, 0.9≤a1≤1.8, 0.8≤x1≤1, 0≤y1≤0.2, and M¹ and M² are each independently at least one element selected from Al, B, Ba, Ca, Ce, Co, Cr, Cu, F, Fe, Mg, Mn, Mo, Nb, P, S, Si, Sr, Ti, V, W, and Zr.

In Chemical Formula 1, for example, 0.85≤x1≤1 and 0≤y1≤0.15; or 0.9≤x1≤1 and 0≤y1≤0.1.

The first positive active material may include, for example, a lithium nickel-based composite oxide represented by Chemical Formula 2.

[Chemical Formula 2] Liₐ₂Niₓ₂Co_{y2}M³_{1-x2-y2}O₂

In Chemical Formula 2, 0.9≤a2≤1.8, 0.8≤x2<1, 0<y2≤0.2, and M³ is at least one element selected from Al, B, Ba, Ca, Ce, Cr, Cu, F, Fe, Mg, Mn, Mo, Nb, P, S, Si, Sr, Ti, V, W, and Zr.

In Chemical Formula 2, for example, 0.85≤x2≤0.99 and 0.01≤y2≤0.15; or 0.9≤x2≤0.99 and 0.01≤y2≤0.1.

The first positive active material may include, for example, a compound of Chemical Formula 3.

[Chemical Formula 3] Liₐ₃Niₓ₃Co_{y3}M⁴_{z3}M⁵_{1-x3-y3-z3}O₂

In Chemical Formula 3, 0.9≤a3≤1.8, 0.8≤x3≤0.98, 0.01≤y3≤0.19, 0.01≤z3≤0.19, M⁴ is at least one element selected from Al, and Mn, and M⁵ is at least one element selected from B, Ba, Ca, Ce, Cr, Cu, F, Fe, Mg, Mo, Nb, P, S, Si, Sr, Ti, V, W, and Zr.

In Chemical Formula 3, for example, 0.85≤x3≤0.98, 0.01≤y3≤0.14, and 0.01≤z3≤0.14; or 0.9≤x3≤0.98, 0.01≤y3≤0.09, and 0.01≤z3≤0.09.

### Second Positive Active Material

The second positive active material is in the form of a single particle, exists alone without a grain boundary within the particle, is composed of one particle, and may be single particle or have a monolith structure or a one body structure, in which particles are not aggregated with each other but exist as an independent phase in terms of morphology, or a non-aggregated particle, and may be expressed as a single particle (one body particle, single grain), for example, as a monocrystal (single crystal). The positive active material according to the embodiment includes the second positive active material in the form of single particles, thereby exhibiting improved cycle-life characteristics while implementing high capacity and high energy density.

The second positive active material includes a lithium nickel-based composite oxide, and the lithium nickel-based composite oxide includes Ni, Co, Mn, Al, Zr, and Mg. For example, the lithium nickel-based composite oxide of the second positive active material may include Ni, Co, and Mn as transition metals, and may include all of Al, Zr, and Mg as a type of doping element. The particle strength of the second positive active material is improved, and internal cracks do not occur even after repeated charging and discharging for a long time, thereby maintaining excellent performance.

The second positive active material corresponds to a high nickel-based positive active material like the first positive active material. The nickel content in the lithium nickel-based composite oxide is greater than or equal to about 80 mol%, for example, greater than or equal to about 85 mol%, greater than or equal to about 89 mol%, greater than or equal to about 90 mol%, greater than or equal to about 91 mol%, or greater than or equal to about 94 mol%, and may be less than or equal to about 99.9 mol%, or less than or equal to about 99 mol% based on the total amount of elements excluding lithium and oxygen. When the nickel content satisfies the above range, the positive active material may exhibit excellent battery performance while realizing a high capacity.

In the second positive active material, an Al content based on the total amount of elements excluding lithium and oxygen may be greater than or equal to about 1.0 mol% and less than about 2.0 mol%, for example about 1.0 mol% to about 1.9 mol%, about 1.0 mol% to about 1.9 mol%, about 1.1 mol% to about 1.9 mol%, about 1.2 mol% to about 1.8 mol%, or about 1.3 mol% to about 1.7 mol%. When the Al content is as above, the second positive active material may maintain high strength even over a long cycle-life, thereby improving cycle-life characteristics of the rechargeable lithium battery, and implementing high capacity and high energy density.

In the second positive active material, a Zr content based on the total amount of elements excluding lithium and oxygen may be greater than or equal to about 0.5 mol% and less than about 1.0 mol%, for example about 0.5 mol% to about 0.9 mol%, about 0.5 mol% to about 0.8 mol%, or about 0.5 mol% to about 0.7 mol%. When the Zr content is as above, the second positive active material may maintain high strength even over a long cycle-life, thereby improving cycle-life characteristics of the rechargeable lithium battery, and implementing high capacity and high energy density.

In the second positive active material, an Mg content based on the total amount of elements excluding lithium and oxygen may be greater than or equal to about 0.1 mol% and less than about 1.0 mol%, for example about 0.1 mol% to about 0.9 mol%, about 0.2 mol% to about 0.8 mol%, or about 0.3 mol% to about 0.7 mol%. When the Mg content is as above, the second positive active material may maintain high strength even over a long cycle-life, thereby improving cycle-life characteristics of the rechargeable lithium battery, and implementing high capacity and high energy density.

The lithium nickel-based composite oxide of the second positive active material may be, for example, represented by Chemical Formula 4.

[Chemical Formula 4] Liₐ₄Niₓ₄Co_{y4}Mn_{z4}Al_{b4}Zr_{c4}Mg_{d4}M⁶_{(1-x4-y4-z4-b4-c4-d4)}O₂

In Chemical Formula 4, 0.9≤a4≤1.8, 0.8≤x4<1, 0<y4≤0.184, 0<z4≤0.184, 0.01≤b4<0.02, 0.005≤c4<0.01, 0.001≤d4<0.01, and M⁶ is at least one element selected from B, Ba, Ca, Ce, Cr, Cu, F, Fe, Mo, Nb, P, S, Si, Sr, Ti, V, and W.

In Chemical Formula 4, for example, 0.85≤x4<1, 0<y4≤0.134, 0<z4≤0.134; or 0.9≤x4<1, 0<y4≤0.084, 0<z4≤0.084. In addition, for example, 0.01≤b4≤0.019, 0.011≤b4≤0.019, or 0.012≤b4≤0.018; 0.005≤c4≤0.009 or 0.005≤c4≤0.008; 0.001≤d4≤0.009, or 0.002≤d4≤0.008.

When the second positive active material includes the lithium nickel-based composite oxide represented by Chemical Formula 4, particle strength is improved, so that long cycle-life characteristics may be improved, and high capacity and high energy density may be realized.

An average particle diameter of the second positive active material, that is, the average particle diameter of the single particles may be about 0.05 µm to about 7 µm, for example, about 0.1 µm to about 7 µm, about 0.5 µm to about 6 µm, or about 1 µm to about 5 µm or 0.5 µm to about 7 µm. The particle diameter of the second positive active material may be the same as or smaller than that of the first positive active material, and thus the density of the positive active material may be further increased. Herein, the average particle diameter of the second positive active material may be obtained by randomly selecting 30 single-particle active materials from the electron microscope photograph of the positive active material to measure a particle diameter, and taking the particle diameter (D50) of the particles having a cumulative volume of 50 volume% in the particle size distribution as the average particle diameter.

In the positive active material according to an embodiment, the first positive active material may be included in an amount of about 50 wt% to about 90 wt%, and the second positive active material may be included in an amount of about 10 wt% to about 50 wt% based on the total amount of the first positive active material and the second positive active material. The first positive active material may be, for example, included in an amount of about 60 wt% to about 90 wt%, or about 70 wt% to about 90 wt% and the second positive active material may be for example included in an amount of about 10 wt% to about 40 wt%, or about 10 wt% to about 30 wt%. When the content ratio of the first positive active material and the second positive active material is as described above, the positive active material including the same may realize high capacity, improve a mixture density, and exhibit high energy density.

In an embodiment, a method of preparing a positive active material for a rechargeable lithium battery includes (i) preparing a first positive active material in a form of secondary particles in which a plurality of primary particles are aggregated, including a lithium nickel-based composite oxide having a nickel content of greater than or equal to about 80 mol% based on the total amount of elements excluding lithium and oxygen, (ii) mixing a nickel-based composite hydroxide containing Ni, Co, and Mn, and having a nickel content of greater than or equal to about 80 mol% based on all elements excluding oxygen and hydrogen, a lithium raw material, an Al raw material, a Zr raw material, and a Mg raw material; and performing heat treatment to prepare a second positive active material in the form of a single particle, and (iii) mixing the first positive active material with the second positive active material. Accordingly, the aforementioned positive active material may be prepared. The prepared positive active material may exhibit excellent long cycle-life characteristics by maintaining high particle strength without internal cracks occurring in the positive active material particles over a long cycle while implementing high capacity and high energy density.

In step (ii), the content of the Al raw material may be greater than or equal to about 1.0 mol% and less than about 2.0 mol% based on the total amount of elements excluding oxygen and hydrogen in the nickel-based composite hydroxide. In addition, the content of the Zr raw material may be greater than or equal to about 0.5 mol% and less than about 1.0 mol% based on the total amount of elements excluding oxygen and hydrogen in the nickel-based composite hydroxide. The content of the Mg raw material may be greater than or equal to about 0.1 mol% and less than about 1.0 mol% based on the total amount of elements excluding oxygen and hydrogen in the nickel-based composite hydroxide.

In step (ii), the heat treatment may be performed, for example, in an oxygen atmosphere, and may be performed at a temperature range of about 700 °C to about 1000 °C for about 5 hours to about 25 hours. In addition, the method for preparing the second positive active material may further include pulverizing the obtained product to obtain a single particle shape after the heat treatment.

In step (iii), the first positive active material and the second positive active material may be mixed in a weight ratio of about 50:50 to about 90:10, for example, in a weight ratio of about 60:40 to about 80:20. In this case, high capacity and high energy density may be realized at the same time.

In the method of preparing the positive active material, the nickel-based composite hydroxide is a positive active material precursor, and may be prepared by a general co-precipitation method, for example, by mixing metal raw materials with a complexing agent and a precipitating agent in a solvent.

### Positive Electrode

A positive electrode for a rechargeable lithium battery may include a current collector and a positive active material layer on the current collector. The positive active material layer includes a positive active material, and may further include a binder and/or a conductive material.

The binder improves binding properties of positive active material particles with one another and with a current collector. Examples thereof may be polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

The content of the binder in the positive active material layer may be about 1 wt% to about 5 wt% based on the total weight of the positive active material layer.

The conductive material is included to provide electrode conductivity and any electrically conductive material may be used as a conductive material unless it causes a chemical change in a battery. Examples of the conductive material include a carbon-based material such as natural graphite, artificial graphite, carbon black, acetylene black, ketjen black, a carbon fiber, a carbon nanofiber, carbon nanotube, and the like; a metal-based material of a metal powder or a metal fiber including copper, nickel, aluminium, silver, and the like; a conductive polymer such as a polyphenylene derivative; or a mixture thereof.

The content of the conductive material in the positive active material layer may be about 1 wt% to about 5 wt% based on the total weight of the positive active material layer.

An aluminium foil may be used as the positive electrode current collector, but is not limited thereto.

### Negative Electrode

A negative electrode for a rechargeable lithium battery includes a current collector and a negative active material layer on the current collector. The negative active material layer includes a negative active material, and may further include a binder and/or a conductive material.

The negative active material may include a material that reversibly intercalates/deintercalates lithium ions, a lithium metal, a lithium metal alloy, a material capable of doping/dedoping lithium, or transition metal oxide.

The material that reversibly intercalates/deintercalates lithium ions may include, for example crystalline carbon, amorphous carbon, or a combination thereof as a carbon-based negative active material. The crystalline carbon may be non-shaped, or sheet, flake, spherical, or fiber shaped natural graphite or artificial graphite. The amorphous carbon may be a soft carbon, a hard carbon, a mesophase pitch carbonization product, calcined coke, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative active material or a Sn-based negative active material. The Si-based negative active material may include silicon, a silicon-carbon composite, SiOₓ (0 < x < 2), a Si-Q alloy (wherein Q is an element selected from an alkali metal, an alkaline-earth metal, a Group 13 element, a Group 14 element, a Group 15 element, a Group 16 element, a transition metal, a rare earth element, and a combination thereof, but not Si) and the Sn-based negative active material may include Sn, SnO₂, a Sn-R alloy (wherein R is an element selected from an alkali metal, an alkaline-earth metal, a Group 13 element, a Group 14 element, a Group 15 element, a Group 16 element, a transition metal, a rare earth element, and a combination thereof, but not Sn). At least one of these materials may be mixed with SiO₂. The elements Q and R may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof.

The silicon-carbon composite may be, for example, a silicon-carbon composite including a core including crystalline carbon and silicon particles and an amorphous carbon coating layer disposed on the surface of the core. The crystalline carbon may be artificial graphite, natural graphite, or a combination thereof. The amorphous carbon precursor may be a coal-based pitch, mesophase pitch, petroleum-based pitch, coal-based oil, petroleum-based heavy oil, or a polymer resin such as a phenol resin, a furan resin, or a polyimide resin. In this case, the content of silicon may be about 10 wt% to about 50 wt% based on the total weight of the silicon-carbon composite. In addition, the content of the crystalline carbon may be about 10 wt% to about 70 wt% based on the total weight of the silicon-carbon composite, and the content of the amorphous carbon may be about 20 wt% to about 40 wt% based on the total weight of the silicon-carbon composite. In addition, a thickness of the amorphous carbon coating layer may be about 5 nm to about 100 nm. An average particle diameter (D50) of the silicon particles may be about 10 nm to about 20 µm. The average particle diameter (D50) of the silicon particles may be preferably about 10 nm to about 200 nm. The silicon particles may exist in an oxidized form, and in this case, an atomic content ratio of Si:O in the silicon particles indicating a degree of oxidation may be about 99:1 to about 33:67. The silicon particles may be SiOₓ particles, and in this case, the range of x in SiOₓ may be greater than about 0 and less than about 2. In the present specification, unless otherwise defined, an average particle diameter (D50) indicates a particle diameter where an accumulated volume is about 50 volume% in a particle size distribution.

The Si-based negative active material or Sn-based negative active material may be mixed with the carbon-based negative active material. When the Si-based negative active material or Sn-based negative active material and the carbon-based negative active material are mixed and used, the mixing ratio may be a weight ratio of about 1:99 to about 90:10.

In the negative active material layer, the negative active material may be included in an amount of about 95 wt% to about 99 wt% based on the total weight of the negative active material layer.

In an embodiment, the negative active material layer further includes a binder, and may optionally further include a conductive material. The content of the binder in the negative active material layer may be about 1 wt% to about 5 wt% based on the total weight of the negative active material layer. In addition, when the conductive material is further included, the negative active material layer may include about 90 wt% to about 98 wt% of the negative active material, about 1 wt% to about 5 wt% of the binder, and about 1 wt% to about 5 wt% of the conductive material.

The binder serves to well adhere the negative active material particles to each other and also to adhere the negative active material to the current collector. The binder may be a water-insoluble binder, a water-soluble binder, or a combination thereof.

Examples of the water-insoluble binder include polyvinyl chloride, carboxylated polyvinyl chloride, polyvinyl fluoride, an ethylene oxide-containing polymer, an ethylene propylene copolymer, polystyrene, polyvinylpyrrolidone, polyurethane, polytetrafluoroethylene, polyvinylidene fluoride, polyethylene, polypropylene, polyamideimide, polyimide, or a combination thereof.

The water-soluble binder may include a rubber binder or a polymer resin binder. The rubber binder may be selected from a styrene-butadiene rubber, an acrylated styrene-butadiene rubber, an acrylonitrile-butadiene rubber, an acrylic rubber, a butyl rubber, a fluororubber, and a combination thereof. The polymer resin binder may be selected from polyethylene oxide, polyvinylpyrrolidone, polyepichlorohydrin, polyphosphazene, polyacrylonitrile, an ethylene propylene diene copolymer, polyvinylpyridine, chlorosulfonated polyethylene, latex, a polyester resin, an acrylic resin, a phenol resin, an epoxy resin, polyvinyl alcohol, and a combination thereof.

When a water-soluble binder is used as the negative electrode binder, a cellulose-based compound capable of imparting viscosity may be further included as a thickener. As the cellulose-based compound, one or more of carboxymethyl cellulose, hydroxypropylmethyl cellulose, methyl cellulose, or alkali metal salts thereof may be mixed and used. The alkali metal may include Na, K, or Li. The amount of the thickener used may be about 0.1 parts by weight to about 3 parts by weight based on 100 parts by weight of the negative active material.

The conductive material is included to provide electrode conductivity and any electrically conductive material may be used as a conductive material unless it causes a chemical change in a battery. Examples of the conductive material include a carbon-based material such as natural graphite, artificial graphite, carbon black, acetylene black, ketjen black, a carbon fiber, a carbon nanofiber, carbon nanotube, and the like; a metal-based material of a metal powder or a metal fiber including copper, nickel, aluminium, silver, and the like; a conductive polymer such as a polyphenylene derivative; or a mixture thereof.

The negative electrode current collector may be selected from a copper foil, a nickel foil, a stainless steel foil, a titanium foil, a nickel foam, a copper foam, a polymer substrate coated with conductive metal, or a combination thereof.

### Rechargeable Lithium Battery

Another embodiment provides a rechargeable lithium battery including a positive electrode, a negative electrode, a separator between the positive electrode and the positive electrode, and an electrolyte.

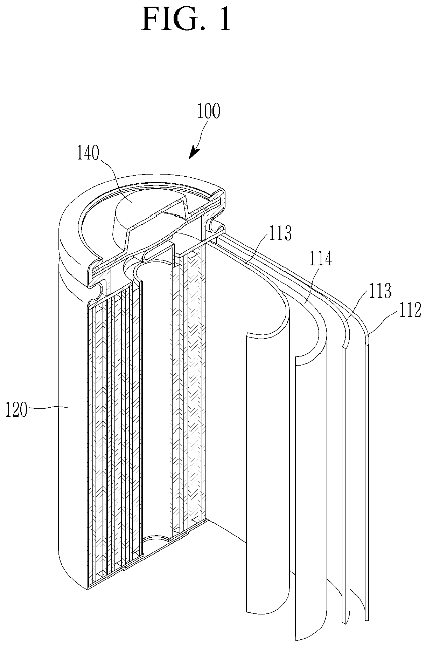

FIG. 1 is a schematic view illustrating a rechargeable lithium battery according to an embodiment. Referring to FIG. 1, a rechargeable lithium battery 100 according to an embodiment includes a battery cell including a positive electrode 114, a negative electrode 112 facing the positive electrode 114, a separator 113 between the positive electrode 114 and the negative electrode 112, and an electrolyte for a rechargeable lithium battery impregnating the positive electrode 114, the negative electrode 112, and the separator 113, a battery case 120 housing the battery cell, and a sealing member 140 sealing the battery case 120.

The electrolyte includes a non-aqueous organic solvent and a lithium salt.

The non-aqueous organic solvent serves as a medium for transmitting ions taking part in the electrochemical reaction of a battery. The non-aqueous organic solvent may be a carbonate-based, ester-based, ether-based, ketone-based, or alcohol-based solvent, or aprotic solvent. Examples of the carbonate-based solvent include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. Examples of the ester-based solvent include methyl acetate, ethyl acetate, n-propyl acetate, dimethyl acetate, methyl propionate, ethyl propionate, γ-butyrolactone, decanolide, valerolactone, mevalonolactone, caprolactone, and the like. The ether-based solvent may be dibutyl ether, tetraglyme, diglyme, dimethoxyethane, 2-methyltetrahydrofuran, tetrahydrofuran, and the like and the ketone-based solvent may be cyclohexanone, and the like. In addition, the alcohol-based solvent may be ethyl alcohol, isopropyl alcohol, etc. and the aprotic solvent may be nitriles such as R-CN (where R is a C2 to C20 linear, branched, or cyclic hydrocarbon group and may include a double bond, an aromatic ring, or an ether bond), amides such as dimethylformamide, dioxolanes such as 1,3-dioxolane, sulfolanes, and the like.

The non-aqueous organic solvent may be used alone or in a mixture. When the non-aqueous organic solvent is used in a mixture, the mixture ratio may be controlled in accordance with a desirable battery performance.

In addition, in the case of the carbonate-based solvent, a mixture of a cyclic carbonate and a chain carbonate may be used. In this case, when the cyclic carbonate and the chain carbonate are mixed in a volume ratio of about 1:1 to about 1:9, the electrolyte may exhibit excellent performance.

The non-aqueous organic solvent may further include an aromatic hydrocarbon-based organic solvent in addition to the carbonate-based solvent. In this case, the carbonate-based solvent and the aromatic hydrocarbon-based organic solvent may be mixed in a volume ratio of about 1:1 to about 30:1.

As the aromatic hydrocarbon-based solvent, an aromatic hydrocarbon-based compound represented by Chemical Formula I may be used.

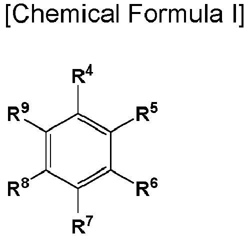

In Chemical Formula I, R⁴ to R⁹ are the same or different and are selected from hydrogen, a halogen, a C1 to C10 alkyl group, a C1 to C10 haloalkyl group, and a combination thereof.

Specific examples of the aromatic hydrocarbon-based solvent may be selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and a combination thereof.

The electrolyte may further include vinylene carbonate or an ethylene carbonate-based compound of Chemical Formula II in order to improve cycle-life of a battery.

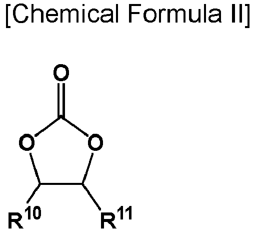

In Chemical Formula II, R¹⁰ and R¹¹ are the same or different, and are selected from hydrogen, a halogen, a cyano group, a nitro group, and a fluorinated C1 to C5 alkyl group, provided that at least one of R¹⁰ and R¹¹ is selected from a halogen, a cyano group, a nitro group, and a fluorinated C1 to C5 alkyl group, but both of R¹⁰ and R¹¹ are not hydrogen.

Examples of the ethylene carbonate-based compound may be difluoro ethylene carbonate, chloroethylene carbonate, dichloroethylene carbonate, bromoethylene carbonate, dibromoethylene carbonate, nitroethylene carbonate, cyanoethylene carbonate, or fluoroethylene carbonate. The amount of the additive for improving cycle-life may be used within an appropriate range.

The lithium salt dissolved in the non-aqueous organic solvent supplies lithium ions in a battery, enables a basic operation of a rechargeable lithium battery, and improves transportation of the lithium ions between positive and negative electrodes.

Examples of the lithium salt may include one or more selected from LiPF₆, LiBF₄, LiSbF₆, LiAsF₆, LiN(SO₂C₂F₅)₂, Li(CF₃SO₂)₂N, LiN(SO₃C₂F₅)₂, Li(FSO₂)₂N (lithium bis(fluorosulfonyl)imide; LiFSI), LiC₄F₉SO₃, LiClO₄, LiAlO₂, LiAlCl₄, LiPO₂F₂, LiN(CₓF₂ₓ₊₁SO₂)(C_{y}F_{2y+1}SO₂), where x and y are natural numbers, for example, integers from 1 to 20, lithium difluoro(bisoxalato) phosphate, LiCl, Lil, LiB(C₂O₄)₂ (lithium bis(oxalato) borate; LiBOB), and lithium difluoro(oxalato)borate (LiDFOB).

The lithium salt may be used in a concentration ranging from about 0.1 M to about 2.0 M. When the lithium salt is included at the above concentration range, an electrolyte may have excellent performance and lithium ion mobility due to optimal electrolyte conductivity and viscosity.

The separator 113 separates a positive electrode 114 and a negative electrode 112 and provides a transporting passage for lithium ions and may be any generally-used separator in a lithium ion battery. In other words, it may have low resistance to ion transport and excellent impregnation for an electrolyte. For example, the separator 113 may include glass fiber, polyester, polyethylene, polypropylene, polytetrafluoroethylene, or a combination thereof, and may be in the form of a nonwoven fabric or a woven fabric. For example, in a lithium ion battery, a polyolefin-based polymer separator such as polyethylene and polypropylene is mainly used. In order to ensure the heat resistance or mechanical strength, a coated separator including a ceramic component or a polymer material may be used. Optionally, it may have a mono-layered or multilayered structure.

Rechargeable lithium batteries may be classified as lithium ion batteries, lithium ion polymer batteries, and lithium polymer batteries according to the presence of a separator and the kind of electrolyte used therein. The rechargeable lithium batteries may have a variety of shapes and sizes, and include cylindrical, prismatic, coin, or pouch-type batteries, and may be thin film batteries or may be rather bulky in size. Structures and manufacturing methods for lithium ion batteries pertaining to this disclosure are well known in the art.

The rechargeable lithium battery according to an embodiment may be used in an electric vehicle (EV), a hybrid electric vehicle such as a plug-in hybrid electric vehicle (PHEV), and a portable electronic device because it implements a high capacity and has excellent storage stability, cycle-life characteristics, and high rate characteristics at high temperatures.

Hereinafter, examples of the present invention and comparative examples are described. It is to be understood, however, that the examples are for the purpose of illustration and are not to be construed as limiting the present invention.

### Example 1

### 1. Preparation of First Positive Active Material in a Form of Secondary Particles

As metal raw materials, nickel sulfate (NiSO₄·6H₂O), cobalt sulfate (CoSO₄·7H₂O) and manganese sulfate (MnSO₄·H₂O) were mixed in a molar ratio of 95:4:1 and dissolved in distilled water as a solvent to prepare a mixed solution, and 10 wt% ammonia water (NH₄OH) was prepared to form a complex compound and 25 wt% sodium hydroxide (NaOH) was prepared as a precipitating agent.

After adding the dilute ammonia water solution to the continuous reactor, the metal raw material mixed solution was continuously added, and sodium hydroxide was added to maintain the pH inside the reactor. After slowly conducting a reaction for about 80 hours, when the reaction was stabilized, a product overflown therefrom was collected and then, washed and dried, obtaining a final precursor. Accordingly, a first nickel-based hydroxide (Ni_{0.95}Co_{0.04}Mn_{0.01}(OH)₂) in the form of secondary particles in which primary particles are aggregated was obtained, washed and dried.

The first nickel-based hydroxide was mixed with LiOH so that a molar ratio of lithium to the total amount of metal of the first nickel-based hydroxide was 1.04, and the mixture was subjected to a first heat treatment at about 750 °C for 15 hours in an oxygen atmosphere to obtain the first positive active material (Li_{1.04}Ni_{0.95}Co_{0.04}Mn_{0.01}O₂). The obtained first positive active material was in the form of secondary particles in which primary particles are aggregated, and the secondary particle had an average particle diameter of about 15 µm.

### 2. Preparation of Second Positive Active Material in a Form of Single Particles

A mixed solution was prepared by dissolving nickel sulfate, cobalt sulfate, and manganese sulfate in distilled water in a molar ratio of 95:4:1. In order to form a complex, 10 wt% a dilute ammonia water (NH₄OH) solution was prepared and 25 wt% sodium hydroxide (NaOH) as a precipitant was prepared. Subsequently, the raw metal material mixed solution, the ammonia water, and the sodium hydroxide were each put into a reactor. Then, while stirred, the reaction proceeded for about 20 hours. Then, the slurry solution in the reactor was filtered, washed with high-purity distilled water, and dried for 24 hours to obtain a second nickel-based hydroxide powder (Ni_{0.95}Co_{0.04}Mn_{0.01}(OH)₂). The obtained second nickel-based hydroxide powder had an average particle diameter of about 4.0 µm.

The obtained second nickel-based hydroxide and LiOH satisfying Li/(Ni+Co+Mn) = 1.05 (a molar ratio)were mixed with dopant components of 1.5 mol% of Al, 0.5 mol% of Zr, and 0.5 mol% of Mg based on 100 mol% of total amount of elements excluding lithium and oxygen in a final second positive active material and then, put in a furnace and secondarily heat-treated under an oxygen atmosphere at 820 °C for 10 hours. Subsequently, a product therefrom was pulverized for about 30 minutes, obtaining a second positive active material (Li_{1.05}Ni_{0.93}Co_{0.035}Mn_{0.01}Al_{0.015}Mg_{0.005}Zr_{0.005}O₂) in a form of single particles. The single particle of the second positive active material had an average particle diameter of about 3.7µm.

### 3. Preparation of Final Positive Active Material

The first positive active material and the second positive active material were mixed in a weight ratio of 7:3, obtaining a final positive active material.

### 4. Manufacture of Positive Electrode

95 wt% of the final positive active material, 3 wt% of a polyvinylidene fluoride binder, and 2 wt% of carbon nanotube conductive material were mixed in an N-methylpyrrolidone solvent to prepare positive active material slurry. The positive active material slurry was applied to an aluminium current collector, dried, and then compressed to manufacture a positive electrode.

### 5. Manufacture of Coin Half-Cell

A coin half-cell was manufactured by disposing a separator having a polyethylene polypropylene multilayer structure between the manufactured positive electrode and a lithium metal counter electrode, and injecting an electrolyte in which 1.0 M LiPF₆ lithium salt was added to a solvent in which ethylene carbonate and diethyl carbonate were mixed in a volume ratio of 50:50.

### Comparative Examples 1 to 3 and Reference Examples 1 to 5

Each positive active material and each rechargeable lithium battery cell was manufactured in the same manner as in Example 1 except that the composition of the second positive active material was changed as shown in Table 1.

**(Table 1)**

| | Content of dopant (mol%) |
|---|---|
| Example 1 | Al 1.5/ Zr 0.5/ Mg 0.5 |
| Comparative Example 1 | Al 0.2/ Zr 0.2 |
| Comparative Example 2 | Al 1.5/ Mg 0.5 |
| Reference Example 1 | Al 0.2/ Zr 0.5/ Mg 0.5 |
| Reference Example 2 | Al 2.0/ Zr 0.5/ Mg 0.5 |
| Reference Example 3 | Al 1.5/ Zr 0.1/ Mg 0.5 |
| Reference Example 4 | Al 1.5/ Zr 1.0/ Mg 0.5 |
| Reference Example 5 | Al 1.5/ Zr 0.2/ Mg 1.0 |

### Evaluation Example 1: Evaluation of Occurrence of Cracks in Particles during Long Cycle Repetition

The rechargeable lithium battery cells according to Example 1 and Comparative Example 1 were charged under conditions of a constant current (0.2 C) and a constant voltage (4.25 V, 0.05 C cut-off), paused for 10 minutes, and discharged to 3.0 V under conditions of constant current (0.2 C). Subsequently, the cells were 600 cycles or more charged and discharged at 1 C at 45 °C.

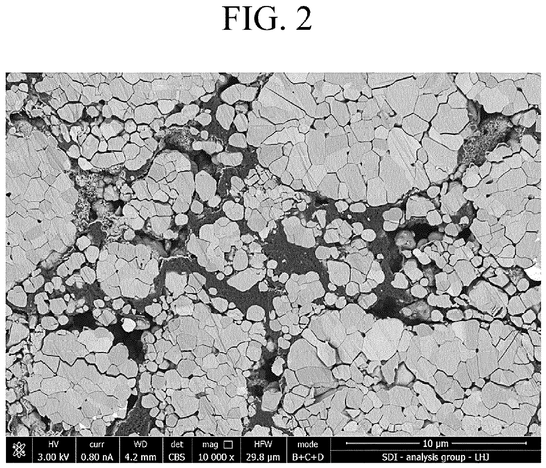

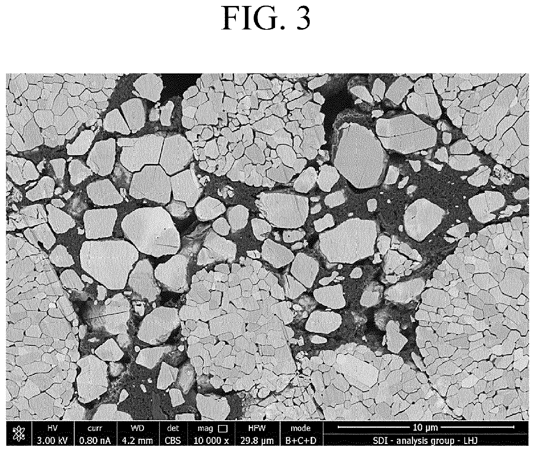

FIG. 2 is an SEM image of a fracture surface of the positive active material in the positive electrode after the battery cell of Comparative Example 1 was cycled 600 times. FIG. 3 is an SEM image of the fracture surface of the positive active material in the positive electrode after the battery cell of Example 1 was cycled 600 times.

Comparing FIG. 2 with FIG. 3, Comparative Example 1 of FIG. 2 shows that the second positive active material of single particles with a size of about 4µm has internal cracks. On the contrary, Example 1 of FIG. 3 shows that the second positive active material of single particles has no internal crack but maintains its shape. The second positive active material according to one embodiment has high particle strength and thus no internal crack despite repeated cycles for a long time but maintains excellent performance.

### Evaluation Example 2: Evaluation of Cycle-life Characteristics of Coin Half-Cells

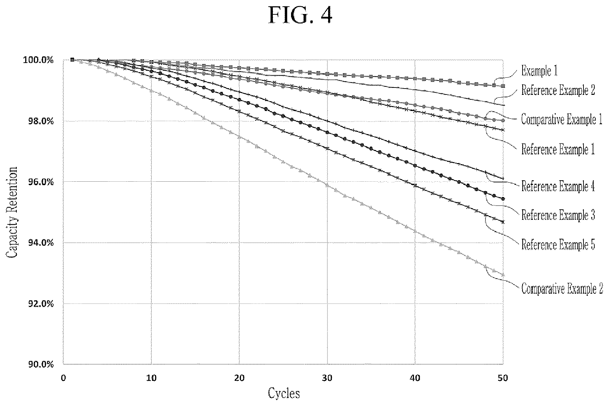

The coin half-cells of Example 1, Comparative Examples 1 to 2, and Reference Examples 1 to 5 were initially charged and discharged in the same method as in Evaluation Example 1 and then, repeated the cycles 50 times to evaluate capacity retention, and the results are show in FIG. 4.

Referring to FIG. 4, compared with Comparative Example 1 in which the Mg dopant is omitted in the second positive active material and Comparative Example 2 in which the Zr dopant is omitted in the second positive active material, Example 1 exhibits improved capacity retention at the 50^{th} cycle.

On the other hand, when the Al content is low (Reference Example 1), or when the Al content is high (Reference Example 2), the 50^{th} capacity retention is slightly lowered, compared with Example 1. In addition, when the Zr content is low (Reference Example 3) or high (Reference Example 4), and when the Mg content is high (Reference Example 5), the 50^{th} capacity retention is slightly lowered, compared with Example 1. In other words, a second positive active material may be doped with Al, Zr, and Mg simultaneously to increase particle strength and significantly improve long cycle-life characteristics, but when each doping element is doped in an optimal amount, overall battery performance may be further improved.

While this invention has been described in connection with what is presently considered to be practical example embodiments, it is to be understood that the invention is not limited to the disclosed embodiments. On the contrary, it is intended to cover various modifications and equivalent arrangements included within the scope of the appended claims.

### <Description of Symbols>

| | | | |
|---|---|---|---|
| 100: | rechargeable lithium battery | 112: | negative electrode |
| 113: | separator | 114: | positive electrode |
| 120: | battery case | 140: | sealing member |

## Claims

1. A positive active material for a rechargeable lithium battery, comprising
a first positive active material in a form of secondary particles in which a plurality of primary particles are aggregated, including a lithium nickel-based composite oxide having a nickel content of greater than or equal to about 80 mol% based on the total amount of elements excluding lithium and oxygen, and
a second positive active material in a form of single particles, including a lithium nickel-based composite oxide having a nickel content of greater than or equal to about 80 mol% based on the total amount of elements excluding lithium and oxygen,
wherein the lithium nickel-based composite oxide of the second positive active material includes Ni, Co, Mn, Al, Zr, and Mg.

2. The positive active material of claim 1, wherein
in the second positive active material, an Al content based on the total amount of elements excluding lithium and oxygen is greater than or equal to about 1.0 mol% and less than 2.0 mol%.

3. The positive active material of claim 1 or claim 2, wherein
in the second positive active material, a Zr content based on the total amount of elements excluding lithium and oxygen is greater than or equal to about 0.5 mol% and less than about 1.0 mol%.

4. The positive active material of any one of claims 1 to 3, wherein
in the second positive active material, an Mg content based on the total amount of elements excluding lithium and oxygen is greater than or equal to about 0.1 mol% and less than about 1.0 mol%.

5. The positive active material of any one of claims 1 to 4, wherein the lithium nickel-based composite oxide of the second positive active material is represented by Chemical Formula 4:
[Chemical Formula 4] Liₐ₄Niₓ₄Co_{y4}Mn_{z4}Al_{b4}Zr_{c4}Mg_{d4}M⁶_{(1-x4-y4-z4-b4-c4-d4)}O₂
wherein, in Chemical Formula 4, 0.9≤a4≤1.8, 0.8≤x4<1, 0<y4≤0.184, 0<z4≤0.184, 0.01≤b4<0.02, 0.005≤c4<0.01, 0.001≤d4<0.01, and M⁶ is at least one element selected from B, Ba, Ca, Ce, Cr, Cu, F, Fe, Mo, Nb, P, S, Si, Sr, Ti, V, and W.

6. The positive active material of any one of claims 1 to 5, wherein the lithium nickel-based composite oxide of the first positive active material is represented by Chemical Formula 1:
[Chemical Formula 1] Liₐ₁Niₓ₁M¹_{y1}M²_{1-x1-y1}O₂
wherein, in Chemical Formula 1, 0.9≤a1≤1.8, 0.8≤x1≤1, 0≤y1≤0.2, and M¹ and M² are each independently at least one element selected from Al, B, Ba, Ca, Ce, Co, Cr, Cu, F, Fe, Mg, Mn, Mo, Nb, P, S, Si, Sr, Ti, V, W, and Zr.

7. The positive active material of any one of claims 1 to 6, wherein
an average particle diameter of the first positive active material is about 5 µm to about 25 µm, and
an average particle diameter of the second positive active material is about 0.5 µm to about 7 µm.

8. The positive active material of any one of claims 1 to 7, wherein
based on the total amount of the first positive active material and the second positive active material, the first positive active material is included in an amount of about 50 wt% to about 90 wt% and the second positive active material is included in an amount of about 10 wt% to about 50 wt%.

9. A rechargeable lithium battery comprising a positive electrode including the positive active material of any one of claims 1 to 8, a negative electrode, and an electrolyte.
